Europäisches Patentamt

European Patent Office

Office européen des brevets

(19)

(11) **EP 1 033 013 B1**

(12) **FASCICULE DE BREVET EUROPEEN**

(45) Date de publication et mention
de la délivrance du brevet:
**20.08.2003 Bulletin 2003/34**

(51) Int Cl.⁷: **H04L 12/56**, H04L 12/46

(21) Numéro de dépôt: **98955684.0**

(86) Numéro de dépôt international:
**PCT/FR98/02458**

(22) Date de dépôt: **18.11.1998**

(87) Numéro de publication internationale:
**WO 99/026380 (27.05.1999 Gazette 1999/21)**

(54) **PROCEDE DE RELAYAGE DE TRAMES APPLICATIVES IP AU SEIN D'UN COMMUTATEUR DE RESEAU ATM A ARCHITECTURE REPARTIE**

VERFAHREN ZUR IP-RAHMENÜBERTRAGUNGS UMLEITUNG IN ATM-NETZEN MIT VERTEILTER ARCHITEKTUR

METHOD FOR RELAYING IP APPLICATION FRAMES IN AN ATM SWITCH WITH DISTRIBUTED NETWORK ARCHITECTURE

(84) Etats contractants désignés:
**CH DE ES FI FR GB IT LI SE**

(30) Priorité: **18.11.1997 FR 9714446**

(43) Date de publication de la demande:
**06.09.2000 Bulletin 2000/36**

(73) Titulaire: **Thales**
**75008 Paris (FR)**

(72) Inventeurs:
• **BAVANT, Marc,**
**Thomson-CSF Propriété Intellectuelle**
**F-94117 Arcueil Cedex (FR)**
• **DELATTRE, Michel**
**THOMSON-CSF Propriété Intellect.**
**F-94117 Arcueil Cedex (FR)**
• **MOUEN-MAKOUA, David**
**THOMSON-CSF Propriété Intellec.**
**F-94117 Arcueil Cedex (FR)**

(74) Mandataire: **Chaverneff, Vladimir**
**THALES Intellectual Property**
**13, Avenue du Président Salvador Allende**
**94117 Arcueil Cédex (FR)**

(56) Documents cités:
**EP-A- 0 597 487**

• **SCHRODI K J ET AL: "INTEGRATION OF IP PACKET FORWARDING IN AN ATM SWITCH" ISS '97. WORLD TELECOMMUNICATIONS CONGRESS. (INTERNATIONAL SWITCHIN SYMPOSIUM), GLOBAL NETWORK EVOLUTION: CONVERGENCE OR COLLISION? TORONTO, SEPT. 21 - 26, 1997, vol. 1, 21 septembre 1997, pages 247-254, XP000720530 ABE S ET AL**
• **"MPOA TIES IT ALL TOGETHER" DATA COMMUNICATIONS, vol. 25, no. 5, 1 avril 1996, pages 120-124, 126, XP000582664**
• **DEBANJAN SAHA ET AL: "A DESIGN FOR IMPLEMENTATION OF THE INTERNET PROTOCOL IN A LOCAL ATMNETWORK" SERVING HUMANITY THROUGH COMMUNICATIONS. SUPERCOM/ICC, NEW ORLEANS, MAY 1 - 5, 1994, vol. 3, 1 mai 1994, pages 1326-1330, XP000438713 INSTITUTE OF ELECTRICAL AND ELECTRONICS ENGINEERS**

**Description**

La présente invention concerne un procédé de relayage de trames applicatives IP au sein d'un commutateur de réseau ATM à architecture répartie et mémorisation en sortie.

Les réseaux de communication connus sous l'abréviation anglo-saxonne ATM de « Asynchronous Transfer Mode » permettent la circulation de paquets de longueur fixe dénommés « cellules ATM », constitués d'un en-tête de cinq octets et d'un corps de quarante-huit octets. L'en-tête contient notamment un identificateur de voie logique, dénommé champ VPI/VCI, abréviation anglo-saxonne pour « Virtual Path Identification et Virtual Channel Identifier » qui permet l'aiguillage de la cellule dans les commutateurs qu'elle rencontre sur son chemin entre l'usager émetteur et l'usager destinataire.

Les applications pouvant utiliser les réseaux ATM pour la communication de leurs données sont très diverses. La plupart des applications susceptibles d'utiliser les réseaux ATM ont un format propre pour leurs données : il peut s'agir, par exemple, de trames au format IP du protocole « INTERNET » ou bien de trames au format de la norme MPEG, où MPEG est l'abréviation anglo-saxonne de « Moving Picture Expert Group ». L'adaptation entre le format des trames applicatives et le format des cellules ATM s'effectue dans une couche appelée couche d'adaptation, désignée sous l'abréviation AAL de « ATM Adaptation Layer », cette couche étant notamment chargée de segmenter les trames en cellules et inversement de réassembler en trames les cellules reçues du réseau.

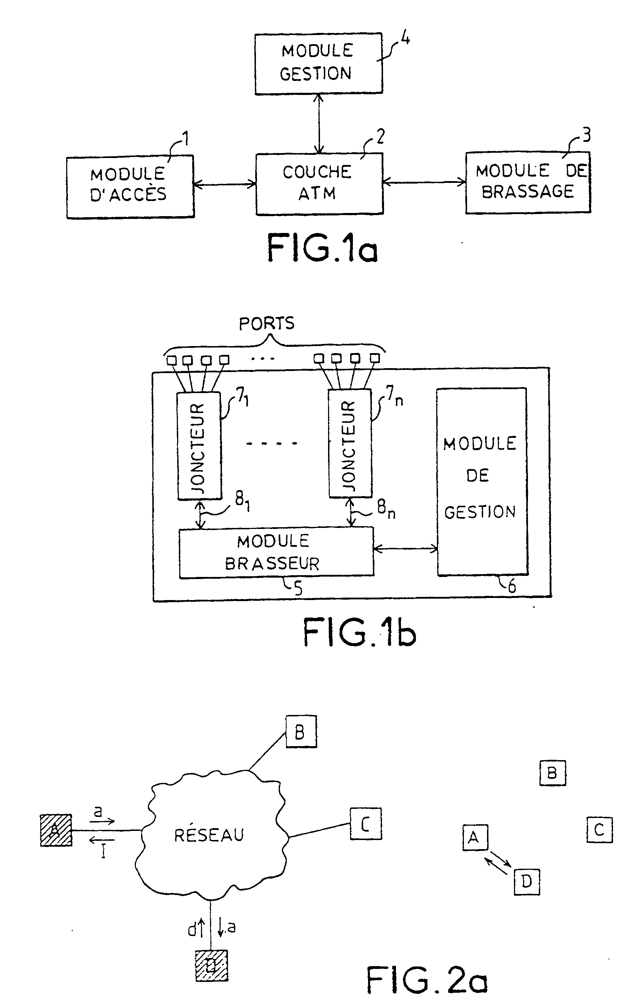

Tout commutateur ATM met en oeuvre, de la façon représentée à la figure 1a, quatre grands ensembles de fonctions, une fonction d'accès 1 à chaque port d'un commutateur ATM, une fonction de couche ATM 2, une fonction de brassage 3 et une fonction de gestion 4.

La fonction d'accès 1 assure la conversion des cellules ATM dans le format qui convient au support de transmission raccordé au dit port et réciproquement. Cette fonction permet de présenter les cellules entrantes, à la couche ATM, sous un format unique qui est indépendant du débit nominal et de la technologie optique, électrique, radio, etc. du support de transmission dont elles proviennent. Les ports d'un commutateur permettent de raccorder plusieurs commutateurs entre eux mais ils permettent également de raccorder un usager des services ATM à un commutateur.

Les traitements à mettre en oeuvre dans la fonction d'accès sont décrits dans une abondante littérature normative, tant de l'ANSI, que de l'UIT et du Forum ATM. Les grandes classes d'interface qui sont définies dans ces documents sont :

L'interface PDH, abréviation anglo-saxonne de « Plesiochronous Digital Hierarchy », définie dans le document UIT-T G.804, G.703.

L'interface SDH, abréviation anglo-saxonne de « Synchronous Digital Hierarchy », définie dans le document UIT-T G.708, etc.
L'interface SONET, abréviation anglo-saxonne de « Synchronous Optical Network », définie dans le document ANSI-T 1.105, etc.
L'interface IBM 25,6 Mbit/s définie dans le document af-phy-0040.000.

La fonction de couche ATM 2 regroupe plusieurs fonctions comme notamment la gestion des en-têtes de cellules, la traduction des voies logiques VPINCI, abréviations anglo-saxonnes de « Virtual Path Identification et Virtual Channel Identifier », le traitement de cellules de gestion OAM, abréviation anglo-saxonne de « Opérations Administration and Maintenance », une partie importante de la gestion des trafics connue sous l'appellation anglo-saxonne de « Traffic management », qui comprend les sous-fonctions connues sous les abréviations anglo-saxonnes UPC de « Usage Parameter Control », SCD de « Selective Cell Discard », EPD de « Early PDU Discard », cellules RM de « Resource Management », etc.

Les traitements à mettre en oeuvre dans la fonction couche ATM sont décrits notamment dans les documents normatifs de l'UIT et du Forum ATM suivants :

- B-ISDN ATM Layer Specification [UIT-T 1.361]
- B-ISDN Operation and Maintenance Principles and Functions [UIT-T I.610]
- Traffic Management Specification Version 4.0 [AF-TM 4.0]

La fonction de brassage 3 commute les cellules d'une direction d'entrée vers une ou plusieurs directions de sortie, en fonction d'indications élaborées par la couche ATM lors de la traduction de voies logiques.

Cette fonction est au coeur de tout commutateur ATM et elle a fait l'objet d'une abondante littérature qu'il n'est pas utile de rappeler ici. L'anneau de brassage et le réseau de brassage constituent deux types fréquents de mise en oeuvre de cette fonction.

La fonction de gestion 4 comprend des sous-fonctions telles que : la supervision locale du commutateur (alarmes, découverte de la configuration du commutateur et de la topologie locale, gestion des versions, etc.), le dialogue avec la supervision centralisée du réseau, les dialogues nécessaires à l'établissement de circuits virtuels commutés, etc.

Pour une description plus détaillée de certaines de ces sous-fonctions, on se rapportera par exemple à la littérature normative du Forum ATM :

- ATM User-Network Interface (UNI) Signaling Specification Version 4.0 (af-sig-0061.000)
- Private Network-Network Interface Specification Version 1.0 (af-pnni-0055.000)

- Integrated Layer Management Interface (af-ilmi-0065.000)

Ces différentes fonctions s'interfacent entre elles comme indiqué ci-après. Il est à noter que la fonction de gestion se comporte exactement comme un usager si ce n'est que son raccordement à la couche ATM ne passe pas par un port externe du commutateur, et, donc, ne nécessite pas de fonction d'accès. En revanche, la fonction de gestion ne traite pas que des cellules ATM mais également des messages qu'il lui faut donc segmenter et réassembler par l'intermédiaire d'une couche d'adaptation AAL qui constitue donc une fonction supplémentaire : la fonction d'adaptation.

Une architecture classique de commutateur consiste à répartir les fonctions sur des organes matériels distincts, éventuellement dupliqués pour permettre le secours d'un organe défaillant de même nature, et implantés dans le commutateur en nombre suffisant pour satisfaire la charge de traitements prévisible en fonction de la configuration du réseau à cet endroit. En pratique, ces organes sont des cartes à composants électroniques, réunies dans un panier, et dialoguant entre elles par un ou plusieurs bus de données aménagés en fond de panier. Ils définissent ce qui est communément appelé une « architecture répartie ».

Traditionnellement, l'architecture matérielle d'un commutateur ATM réparti distingue, comme le montre la figure 1b, trois types de modules : un module brasseur 5, un module de gestion 6 et des modules joncteurs $7_1 \ldots 7_n$. Les fonctions du commutateur se distribuent sur ces différents modules avec toutefois la contrainte que les modules joncteurs traitent au moins la fonction d'accès, le module brasseur 5 la fonction de brassage et le module de gestion 6 la fonction de gestion.

Sur la figure 1b, les liens $8_1 \ldots 8_n$ existant entre chaque module joncteur et le module brasseur s'appellent « jonctions brasseur ». Par ailleurs, chaque joncteur met en oeuvre une fonction d'accès capable de gérer un ou plusieurs ports. Quand une cellule traverse un commutateur, elle commence par traverser un premier joncteur, dit « joncteur d'entrée » pour cette cellule, puis un second joncteur, dit « joncteur de sortie ». Comme plusieurs joncteurs d'entrée peuvent simultanément envoyer des cellules vers un même joncteur de sortie, il peut se produire un encombrement de cellules du fait du débit de sortie limité de ce joncteur de sortie. Des mécanismes de stockage et de mise en file d'attente des cellules sont alors enclenchés en attendant la résorption de l'encombrement. Ces mécanismes de stockage peuvent se trouver en entrée, en sortie, dans le brasseur ou dans plusieurs de ces éléments à la fois. On parle alors d'architecture avec « mémorisation en entrée », « mémorisation en sortie », etc.

Les usagers d'un réseau de communications peuvent envisager plusieurs modes d'échange de leurs données. Ceux-ci sont représentés schématiquement sur les figures 2a à 2f. Le mode point à point, figure 2a, met en relation deux usagers A, D exclusivement, chacun d'eux pouvant être émetteur et récepteur. Dans ce mode, tout ce qu'émet l'un des usagers est reçu par l'autre. Une variante du mode point à point consiste à spécialiser les rôles d'émetteur ou récepteur de chacun des deux usagers (communication point à point unidirectionnelle).

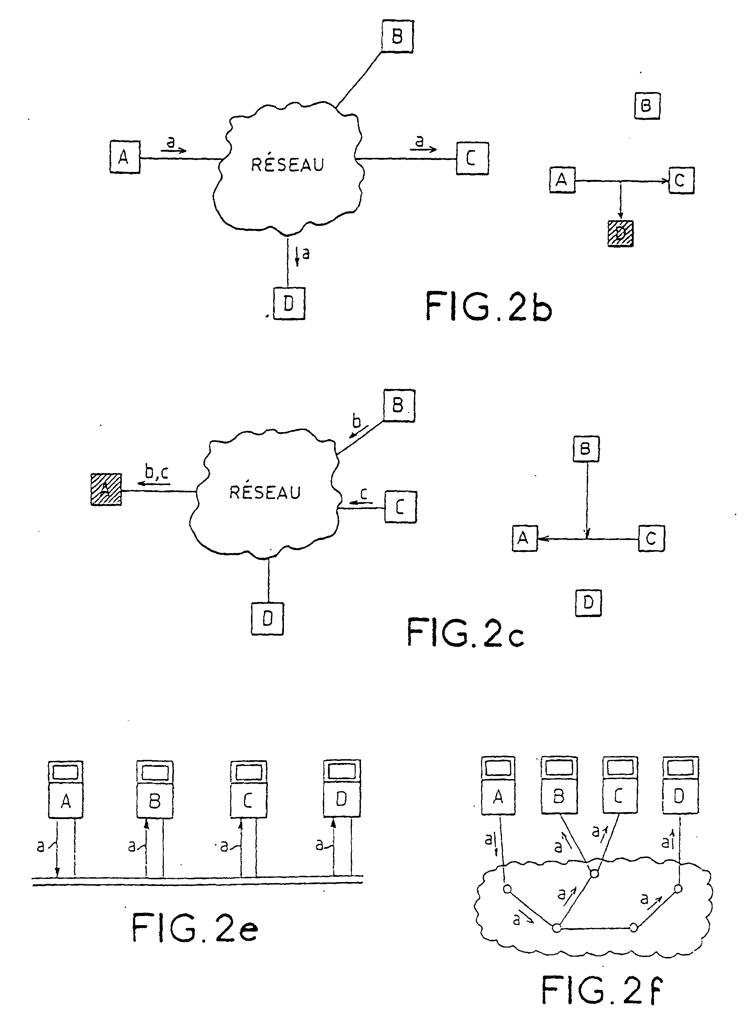

Le mode point à multipoint, figure 2b, met en relation plus de deux usagers, A, C, D dont l'un est exclusivement émetteur et les autres sont exclusivement récepteurs. Tout ce qui est émis par l'émetteur est reçu par tous les récepteurs.

Le mode multipoint à point, figure 2c, met également en relation plus de deux usagers, A, B, C dont l'un est exclusivement récepteur et les autres sont exclusivement émetteurs. Tout ce qui est émis par l'un des émetteurs est reçu par le récepteur.

Enfin, le mode multipoint à multipoint, non représenté, met en relation au moins deux usagers, A, B, C, D chacun pouvant être émetteur et récepteur. Dans ce dernier mode, tout ce qui est émis par l'un quelconque des usagers est reçu par tous les autres usagers et aussi par l'émetteur.

Les communications multipoint à multipoint et point à multipoint sont particulièrement naturelles dans le cas d'un réseau de communication à médium partagé tel que les réseaux Ethernet comme représenté schématiquement figure 2e. En effet, dans ce cas, tous les usagers sont reliés à un médium unique et toutes les stations connectées A, B, C, D à ce médium reçoivent tous les messages envoyés par les autres stations. Au contraire, dans le cas d'un réseau ATM, comme représenté schématiquement figure 2f la diffusion à des destinataires multiples A, B, C, D d'une cellule émise par un des usagers nécessite que le réseau engendre lui-même les copies de la cellule en question.

On appelle « connexion » toute communication selon l'un des modes définis plus haut, entre un ensemble bien défini d'usagers, cette communication étant dotée d'une liste précise d'attributs tels que : paramètres de qualité de service, paramètres de trafic, etc.

La mise en oeuvre au sein d'un réseau ATM de communications dans les différents modes définis ci-dessus peut être vue de plusieurs points de vue, notamment : signalisation, routage, acheminement des données et gestion des ressources.

En ce qui concerne les connexions point à point, les aspects de signalisation et de routage sont abondamment décrits dans les documents ([UIT-T Q. 2931], [AF-SIG 4.0], [AF-PNNI1.0], [AF-IISP]) de la littérature normative.

Ils consistent à déterminer dans le réseau un chemin entre les deux usagers, tel que ce chemin satisfasse aux contraintes de qualité de service et de trafic de la connexion. Le chemin est caractérisé par une liste d'artères. Chaque commutateur du chemin attribue à la connexion un numéro de voie logique relatif à l'artère d'entrée de la connexion dans le commutateur et entretient une table de traduction qui, à cet identificateur, fait correspondre la direction sortante que la cellule doit emprunter et l'identificateur de voie logique de la connexion dans le commutateur suivant. Ainsi toute cellule d'une connexion peut être aiguillée de proche en proche uniquement en consultant l'identificateur de voie logique présent dans l'en-tête de cellule et la table locale de traduction.

Dans un commutateur à architecture répartie, tel celui de la figure 1b, cette traduction peut être effectuée par la fonction de couche ATM du joncteur d'entrée. La cellule est ensuite remise au module brasseur avec une indication de la jonction brasseur de sortie vers laquelle le brasseur doit commuter la cellule. Cette indication peut être convoyée dans un en-tête spécifique rajouté en début de cellule. Des dispositifs de traduction conformes à ce cas de figure ont été décrits par la Demanderesse, par exemple dans les demandes brevets français N° 2 670 972, 2 681 164, 2 726 669 et de la demande de brevet FR 97 07355 non encore publiée.

Symboliquement, les connexions point à multipoint peuvent être représentées par un « arbre » avec une « racine » représentant l'usager émetteur et ses « feuilles » représentant les usagers récepteurs. La mise en oeuvre de ce type de connexions est normalisée en ce qui concerne la signalisation et le routage. Il s'agit simplement de former une connexion point à multipoint en créant d'abord une connexion point à point, puis en lui greffant de nouvelles feuilles. Cette adjonction de feuilles peut se faire à l'initiative de la racine ou bien de la feuille.

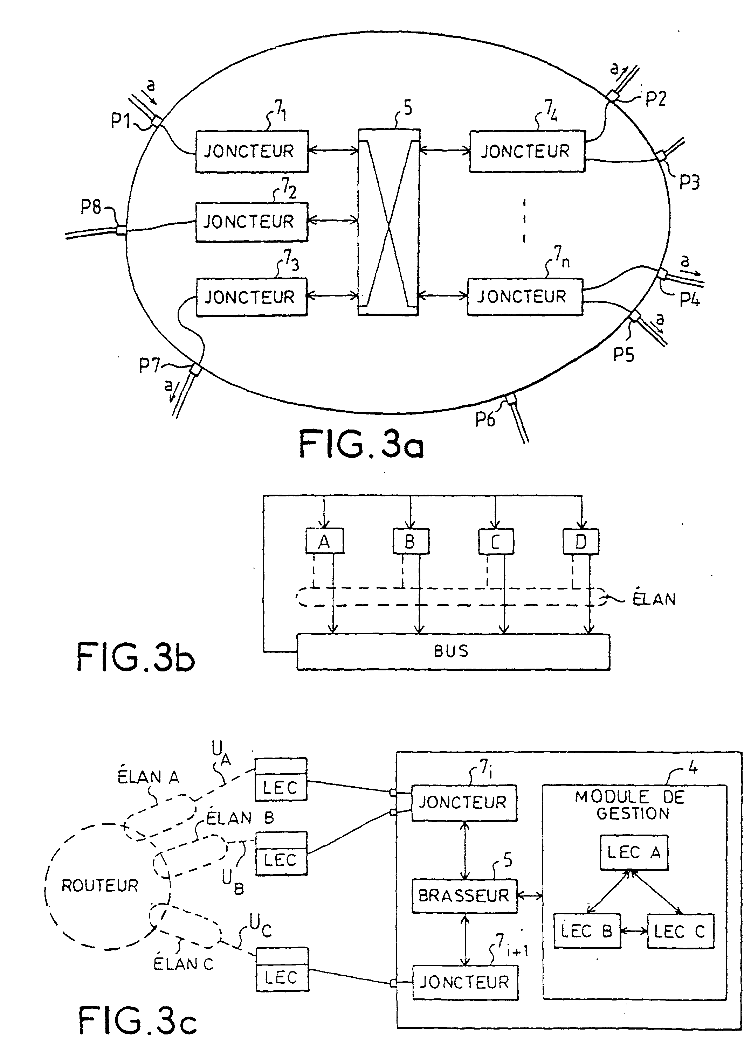

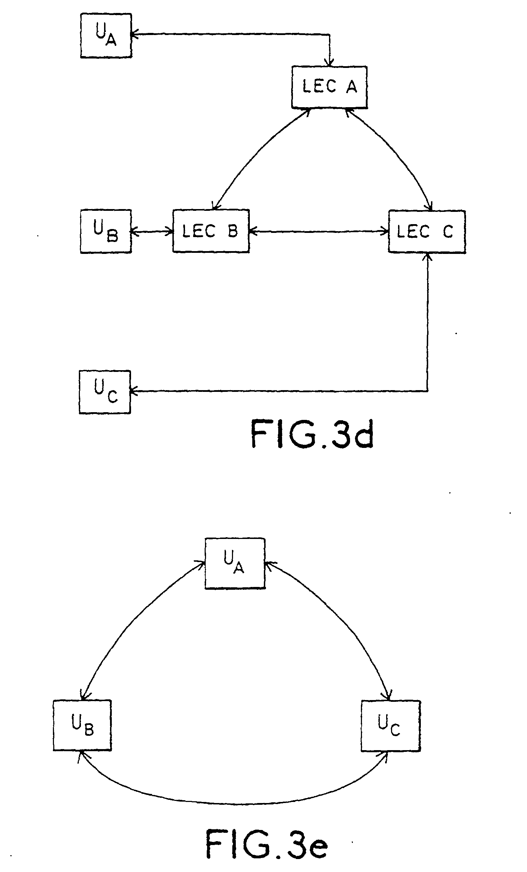

En ce qui concerne l'acheminement des cellules, le modèle de la connexion point à point, c'est-à-dire la traduction d'entrée seule, ne peut pas toujours s'appliquer. Sur la figure 3a où les éléments homologues à ceux de la figure 1b sont repérés avec les mêmes références, il est représenté une connexion point à multipoint. Cette connexion entre dans le commutateur par un port P1 et en sort par les ports P2, P4, P5, P7. Dans ce cas, la traduction d'entrée envisagée plus haut peut ordonner au brasseur 5 de copier chaque cellule de cette connexion vers les trois jonctions brasseurs concernées ($7_3$, $7_4$, $7_n$) mais elle n'est pas capable d'indiquer les ports de sortie sur lesquels la cellule doit être envoyée. Pour ce faire, il y a lieu de rajouter cette information dans les tables de traduction et de la convoyer de l'entrée jusqu'à la sortie. Par ailleurs, la voie logique de sortie dépend de chaque port de sortie et il ne peut pas être attribué une voie logique unique pour toutes les sorties.

Pour toutes ces raisons, il est généralement préféré de faire une double traduction : une traduction d'entrée qui remplace la voie logique de la cellule par un « index de diffusion » représentatif de la connexion au sein du commutateur, puis une deuxième traduction en sortie qui traduit l'index de diffusion en une liste de couples de la forme (port, voie logique) avec les recopies éventuellement nécessaires.

Les connexions multipoint à point et multipoint à multipoint ne sont pas pour l'heure traitées dans les organes de normalisation s'occupant de l'ATM. Il n'y a donc pas pour l'instant de signalisation ni de routage défini pour ce type de connexions.

En termes d'acheminement des cellules, toute topologie de communication amenant des données de différentes origines géographiques à converger vers un même lien pose le problème dit d'« entrelacement des trames applicatives PDUs », PDU étant l'abréviation anglo-saxonne de « Protocol Data Unit ». En effet, les trames applicatives (PDUs) étant segmentées par la couche AAL en cellules, les cellules de différentes trames arrivent entrelacées au destinataire. Pour réassembler les trames, le destinataire devrait pouvoir retrouver à quelle trame appartient chaque cellule. Or, le mécanisme de segmentation le plus couramment utilisé dans les connexions UBR, mis en oeuvre dans la couche d'adaptation AAL 5, ne permet pas cette identification. Il ne permet que l'identification de la dernière cellule de la trame PDU, ce qui suffit dans les modes point à point ou point à multipoint car les cellules ATM sont transmises en séquence.

En dépit de tous ces problèmes, des besoins de communications en mode multipoint à point et multipoint à multipoint existent. Ils pourraient être traités théoriquement par superposition de connexions point à point ou point à multipoint. Le cas apparaît notamment dans le cadre de l'émulation de réseau local connu sous les abréviations anglo-saxonnes LAN Emulation ou LANE de « Local Array Network Emulation », où tout un mécanisme sophistiqué est mis en place pour émuler un médium partagé (ELAN) au sein d'un réseau ATM [AF LANE]. A chaque usager est assignée une fonction LEC (Lan Emulation Client). L'émulateur de médium partagé permet de réaliser des communications multipoint à multipoint en utilisant le serveur connu sous l'abréviation anglo-saxonne BUS de « Broadcast or Unknown Server » qui est défini dans la norme LANE, et dont l'architecture est montrée figure 3b, qui sert à un usager pour transmettre des messages en diffusion vers tous les usagers d'un médium partagé émulé, ou vers un autre usager auquel il n'est pas encore directement raccordé. Chaque usager de l'ELAN possède une connexion point à point vers le serveur BUS et le serveur BUS possède une connexion point à multipoint vers tous les usagers de l'ELAN, comme indiqué dans la figure 3b.

Un autre exemple de besoin en communications multipoint à point et multipoint à multipoint est fourni par l'émulation de routage entre réseaux locaux. Cette fonction peut notamment être mise en oeuvre suivant la norme connue sous l'abréviation anglo-saxonne MPOA de « Multiprotocol Over ATM » du Forum ATM qui permet d'effectuer un routage virtuel entre différents réseaux locaux émulés (ELANs) ou différents réseaux locaux virtuels (VLANs) d'un ELAN [AF MPOA]. Une autre façon d'effectuer l'émulation de routage consiste à embarquer un logiciel de routage dans l'unité de gestion du commutateur ATM. Une telle fonction embarquée d'émulation de routage est désignée dans la suite par routeur virtuel. Dans ce contexte, un routeur virtuel est assimilable à un usager des différents ELANs qu'il interconnecte. A ce titre, il doit lui correspondre une fonction LEC (LEC routeur) pour chaque ELAN. Le routeur virtuel doit être mis en oeuvre dans un commutateur, par exemple par un processus spécifique s'exécutant dans le module de gestion, ce qui risque d'engorger ledit module lorsque les échanges entre ELANs sont suffisamment soutenus.

La demande de brevet EP 0 597 487 décrit un gigarouteur IP (avec des interfaces IP), réalisé sur un coeur de brassage ATM. Le coeur ATM est un commutateur ATM tout à fait normal, la conversion de IT vers ATM puis d'ATM vers IP étant réalisée dans des terminaux d'adaptation extérieurs. Ces organes d'adaptation comportent des tables de traduction entre adresses IP et voies logiques ATM. Les traitements de la couche ATM, réalisés dans le coeur ATM, n'ont pas connaissance des informations présentes dans l'en-tête IP.

Le document intitulé "Integration of IP Packet Forwarding in an ATM switch" ayant pour auteurs Karl J. Schrodi et Hans-Joachim Hey, publié au XVI World Telecom Congress Proceeding divulgue le principe d'intégrer un routeur dans un commutateur afin d'économiser des ports du commutateur et de définir des ports virtuels sur le routeur ce qui autorise les courts-circuits. Ce document rappelle que, comme dans tout routeur, il est possible de filtrer l'adresse destinataire, afin d'empêcher certains paquets d'atteindre leur destination pour des raisons administratives. Pour cela il utilise une table de routage usuelle qui permet donc en regard d'une adresse IP destinataire et d'un masque de sous-réseau de trouver l'adresse IP d'une passerelle et de l'interface correspondante.

Le but de l'invention est de pallier les inconvénients précités.

A cet effet, l'invention a pour objet un procédé de relayage de trames IP sous la forme de trames applicatives PDU au sein d'un commutateur ATM à architecture répartie et mémorisation en sortie comportant un module de gestion (4) et plusieurs joncteurs d'entrée et de sortie disposant d'une fonction d'émulation de routage de trame IP entre les usagers des différents médias ELANs et représentée dans chacun des ELANs par son module LEC routeur, caractérisé en ce que :

- la fonction de relayage de trame est déportée dans la couche ATM des joncteurs d'entrée ladite fonction de relayage comportant au moins une étape de traduction de l'en-tête des cellules de la trame applicative comprenant :

  - pour la première cellule de chaque trame applicative PDU parvenant à un joncteur d'entrée l'extraction de l'adresse IP du destinataire,
- si l'adresse IP est contenue dans une table de cache du joncteur d'entrée correspondant la recherche d'un couple voie logique et direction sortante en regard de l'adresse IP concernée et de la voie logique d'entrée, appliquer ledit couple à toutes les autres cellules de la trame applicative,
- si l'adresse IP n'est pas contenue dans la table de cache ou si l'information est trop ancienne, la transmission d'une requête de mise à jour du cache au module de gestion et la mise à jour la table de cache grâce à des informations de routage résident dans le module de gestion.

D'autres caractéristiques et avantages de l'invention apparaîtront à l'aide de la description qui suit faite en regard des dessins annexés qui représentent :

- la figure 1a, un schéma de principe d'un commutateur ATM selon l'art antérieur,
- la figure 1b, un schéma de principe d'un commutateur ATM à architecture répartie selon l'art antérieur,
- les figures 2a à 2f, des schémas illustrant des modes de communications entre usagers d'un réseau ATM,
- la figure 3a un exemple d'aiguillage d'une cellule ATM dans un commutateur lors d'une connexion point à multipoint,
- la figure 3b, un exemple de superposition de connexions point à point ou point à multipoint dans une architecture LAN émulée,
- la figure 3c, un schéma de principe de routage entre ELANs,
- les figure 3d et 3e, une illustration du processus de court circuit dynamique mis en oeuvre par l'invention,
- la figure 4, un exemple d'organisation d'un commutateur ATM pour la mise en oeuvre du procédé selon l'invention.

Le procédé selon l'invention permet de pallier l'inconvénient de l'art antérieur cité plus haut en ce qui concerne la charge trop importante de l'unité de gestion qui embarque un routeur virtuel de trames IP. Le procédé permet de réaliser à l'intérieur du commutateur ATM une véritable décentralisation de la fonction de relais IP (IP forwarding en anglais) en limitant le rôle du routeur à sa fonction de calcul de routes déjà connue de l'art antérieur.

La figure 3c montre un cas où ce procédé est utilisable. Le routeur virtuel possède autant de modules LECs routeur que d'ELANs qu'il connaît. Si l'usager UA appartenant à l'ELAN A veut envoyer une trame IP à destination d'un usager UB, il commence par utiliser les moyens de diffusion sur l'ELAN A (serveur de diffusion BUS). Si le routeur interne au commutateur a connaissance de l'existence de l'usager UB, le module LEC A de ce routeur, associé à l'ELAN A, se déclare comme destinataire de toutes les trames IP à destination de l'usager UB. Par la suite l'usager UA établit et utilise sa connexion ATM directe avec le LEC A, selon le procédé habituel spécifié dans la norme LANE, pour émettre des trames à destination de l'usager UB. Selon l'art antérieur, les trames doivent remonter jusqu'au routeur interne du module de gestion, pour les relayer vers l'usager UB en utilisant la connexion ATM directe qui existe entre le module LEC B et l'usager UB.

Le procédé suivant l'invention spécifie que pour toute trame applicative PDU arrivant sur une connexion directe concernant le module LEC A, le joncteur d'entrée examine sa première cellule et en extrait l'adresse IP du destinataire. Il parcourt alors une table de cache mise à jour grâce à des informations de routage provenant du module de gestion, et y trouve en regard de l'adresse IP et de la voie logique entrante un couple (voie logique, direction sortante). La direction sortante est l'identifiant de la jonction brasseur concernée par la connexion directe entre le module LEC B de l'usager UB. La voie logique est un index interne permettant de retrouver la voie logique de cette connexion grâce à un mécanisme de traduction de sortie qui sera décrit plus loin. Si le joncteur d'entrée ne trouve pas l'adresse IP recherchée dans la table de cache, il envoie une requête de mise à jour du cache au module de gestion. Les informations trouvées dans la table servent alors à la traduction de l'en-tête ATM de chaque cellule de la trame PDU concernée. Ceci permet par un processus de traduction dynamique, la table de traduction étant modifiée potentiellement lors du passage de chaque trame PDU, d'établir ainsi un « court-circuit dynamique » entre deux connexions point à point comme schématisé sur la figure 3d.

Si la voie logique trouvée dans la table de traduction d'entrée était simplement la voie logique associée à la connexion directe entre le module LEC B et l'usager UB, il en résulterait un entrelacement entre les différentes PDUs envoyées simultanément par divers usagers des ELANs concernés vers le même usager UB de l'ELAN B.

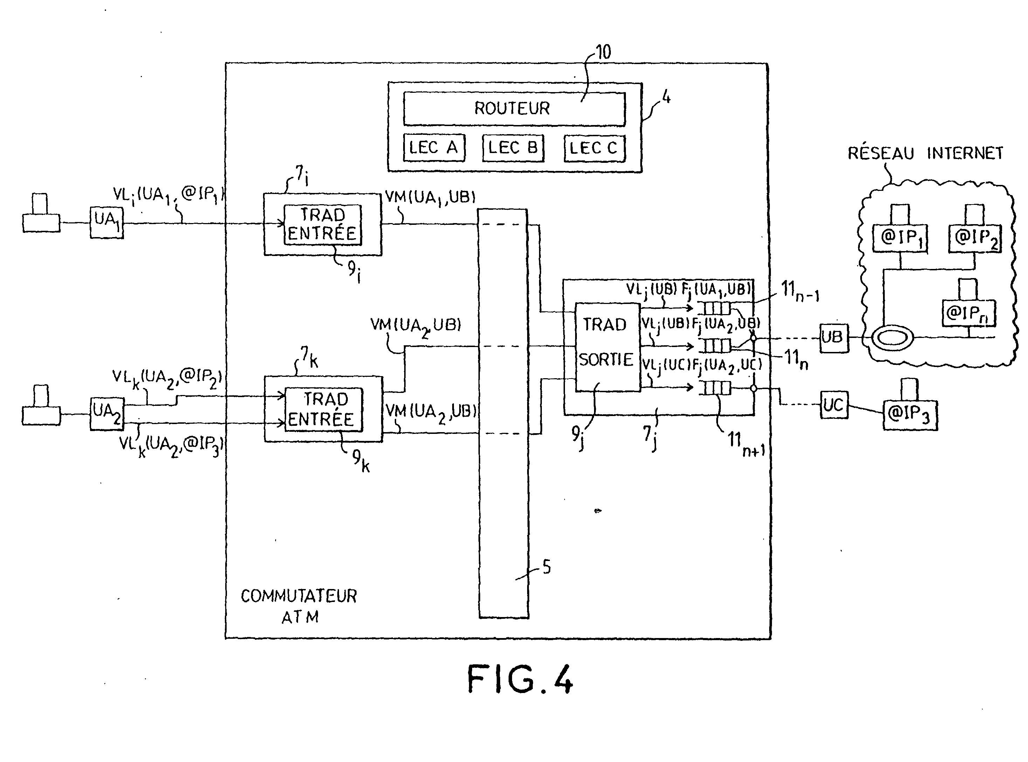

Afin d'éviter cet inconvénient le procédé selon l'invention prévoit une double traduction. Pour cela, les joncteurs d'entrée et de sortie du commutateur sont munis de la façon représentée à la figure 4, où les éléments homologues à la figure 3c sont représentés avec les mêmes références, de tables de traduction 9. Sur la figure 4, où seulement deux joncteurs d'entrée 7i et 7k et seulement un joncteur de sortie 7j sont représentés, les tables de traduction des joncteurs d'entrée 7i et 7k portent respectivement les références 9i et 9k et la table de traduction du joncteur de sortie 7j porte la référence 9j. Ces tables de traduction permettent dans l'exemple représenté de connecter des usagers émetteurs $UA_1$, $UA_2$ à des usagers destinataires UB et UC dont l'un UB figure un réseau local. Chaque cellule en provenance d'un usager émetteur adresse une table de traduction 9 par un couple de valeurs formé d'un numéro de voie logique et de l'adresse IP ($@IP_1$, $@IP_2$, ...) de l'usager destinataire. Le couple voie logique et adresse IP est transformé par la table de traduction 9 en un couple de valeurs composées d'une valeur index VM et d'un numéro d'identifiant $L_j$ d'un joncteur de sortie j concerné par la connexion directe entre le module LEC B de l'unité de gestion 4 et le LEC UB de l'usager destinataire. Dans l'exemple de la figure 4, la table de traduction 9i du joncteur 7i réalise la traduction du couple (VLi ($UA_1$), $@IP_1$) en un couple (VM ($UA_1$, UB), $L_j$) où VLi ($UA_1$) est la voie logique associée dans le joncteur 7i à la connexion directe entre l'utilisateur $UA_1$ et le module LEC A du module de gestion 4, $@IP_1$ est l'adresse IP de l'usager destinataire appartenant au réseau local UB, VM (UX,UY) est un numéro d'index interne de connexion attribué à chaque couple d'usagers (UX,UY) et $L_j$ est l'identifiant de la jonction brasseur 7j concernée par la connexion directe entre le module LEC B et l'usager destinataire UB.

Egalement suivant ce même principe, l'exemple de la figure 4 montre un exemple de connexion entre un usager $UA_2$ et deux usagers destinataires ayant des adresses respectives $@IP_2$ et $@IP_3$. Dans cet exemple, des communications de $UA_2$ vers UB et de $UA_2$ vers UC sont réalisées chacune dans le joncteur 7k par les traductions respectives suivantes :

$$VL_k (UA_2, @IP_2) \rightarrow (VM (UA_2, UB), L_j$$

et

$$VL_k (UA_2, @IP_3) \rightarrow (VM (UA_2, UC), L_j$$

Selon l'invention, chaque joncteur de sortie 7j dispose d'un grand nombre de files d'attente $11_n$ tel qu'une de ces files, Fj (UX,UY), peut être attribuée univoquement à chaque couple (UX,UY) où UY est un usager dont la connexion directe entre lui-même et son LEC routeur LEC Y passe par le joncteur 7j. Une table de traduction de sortie 9j disposée dans chacun des joncteurs de sortie 7j réalise une traduction de sortie de la valeur de l'index VM (UX,UY) en un couple (VLj (UY), Fj (UX, UY)), où VLj (UY) est la voie logique associée dans le joncteur de sortie 7j à la connexion directe entre l'usager UY et le module LEC Y et Fj (UX,UY) est le numéro de la file d'attente du joncteur 7j attribué au couple (UX,UY).

L'index interne VM (UX, UY) doit permettre la traduction de sortie sur le joncteur 7j concerné par l'usager UY. Il n'est donc pas nécessaire que la fonction VM associant un index à chaque couple (UX,UY) soit univoque (injective) car la traduction de l'index est faite dans le contexte du joncteur j. Le nombre d'index nécessaires dans l'ensemble du commutateur est donc le maximum du nombre des files d'attente de sortie dans chacun des joncteurs. Par ailleurs, il n'est pas nécessaire non plus que la fonction VM soit définie pour tout couple (UX,UY) car deux usagers quelconques UX et UY n'ont pas toujours besoin de dialoguer, ou ils peuvent parfois dialoguer sans passer par le routeur s'ils appartiennent au même ELAN. L'attribution des index et des files de sortie peut donc être faite dynamiquement, en fonction des besoins exprimés, par exemple en relation avec la mise à jour des caches de traduction d'entrée.

Enfin, un arbitre de sortie à la portée de l'homme de l'art, et donc non représenté, réalise l'extraction « en mode PDU » des cellules des files d'attente et leur transmission sur l'interface physique. Le fonctionnement « en mode PDU » signifie qu'une file d'attente n'est considérée comme prête à émettre que lorsqu'elle contient au moins une trame PDU complète et que l'arbitre n'extrait que des trames PDUs complètes.

**ANNEXE BIBLIOGRAPHIQUE**

Article :

[HYOJEONG] A simple and fast sheduler for input queued ATM switches, Hyojeong Song et al., HPC ASIA '97

Normes du Forum ATM :

[AF TM4.0] Traffic Management Specification Version 4.0, ATM Forum, af-tm-0056.000
[AF SIG4.0] ATM User-Network Interface (UNI) Signaling Specification Version 4.0, ATM Forum, af-sig-0061.000
[AF PNNI1.0] Private Network Interface Specification Version 1.0, ATM Forum, af-pnni-0055.000
[AF IISP] Interim Interswitch Signaling Protocol, ATM Forum, af-pnni-0026.000
[AF LANE] LAN Emulation Over ATM Version 1.0, ATM Forum, af-lane-0021.000
[AF MPOA] Multiprotocol Over ATM Version 1.0, ATM Forum, af-mpoa-0087.000

**Revendications**

1. Procédé de relayage de trames IP sous la forme de trames applicatives PDU au sein d'un commutateur ATM à architecture répartie et mémorisation en sortie comportant un module de gestion (4) et plusieurs joncteurs d'entrée et de sortie (7i....7k, 7j) disposant d'une fonction d'émulation de routage de trame IP entre les usagers des différents médias ELANs et représentée dans chacun des ELANs par son module LEC routeur, **caractérisé en ce que** :

- la fonction de relayage de trame est déportée dans la couche ATM des joncteurs d'entrée (7i...7k), ladite fonction de relayage comportant au moins une étape de traduction de l'en-tête des cellules de la trame applicative comprenant :

  - pour la première cellule de chaque trame applicative PDU parvenant à un joncteur d'entrée (7i....7k), l'extraction de l'adresse IP du destinataire,
  - si l'adresse. IP est contenue dans une table de cache (9i,...9k) du joncteur d'entrée correspondant (7i,...7k), la recherche d'un couple voie logique et direction sortante en regard de l'adresse IP concernée et de la voie logique d'entrée, appliquer ledit couple à toutes les autres cellules de la trame applicative,
  - si l'adresse IP n'est pas contenue dans la table de cache (9i....9k) ou si l'information est trop ancienne, la transmission d'une requête de mise à jour du cache (9i,..9k) au module de gestion (4) et la mise à jour la table de cache (9i,...9k) grâce à des informations de routage résidant dans le module de gestion.

2. Procédé selon la revendication 1, **caractérisé en ce qu'**il comporte une étape de double traduction, une première traduction dans chaque joncteur d'entrée (7i....7k) pour transformer le numéro de voie logique Vli, fonction de UX, entre l'usager UX et le module LEC du routeur relatif à l'ELAN auquel l'usager UX appartient et l'adresse IP du destinataire de chaque trame applicative provenant de l'usager (UX) appliquée à l'entrée d'un joncteur (7i...7k) en un numéro d'index interne VM, fonction de UX et UY et un numéro d'identifiant Lj d'un joncteur de sortie (7j), une deuxième traduction dans chaque joncteur de sortie (7j) pour transformer le numéro d'index VM, fonction de UX et UY en un numéro de voie logique VLj fonction de Uj associée dans le joncteur de sortie (7j) à la connexion directe entre l'usager UY et son module LEC routeur correspondant et un numéro de file d'attente du joncteur de sortie (7j) attribué au couple (Ux, UY).

3. Procédé selon l'une quelconque des revendications 1 et 2, **caractérisé en ce qu'**il consiste :

   - à attribuer dans chaque joncteur de sortie (7j) une file d'attente ($11_n$) pour chaque couple d'usager, dont le deuxième est rattaché au joncteur considéré, c'est-à-dire que la connexion directe entre lui-même et le module LEC routeur correspondant passe par ce joncteur,

- à attribuer dynamiquement les index internes et les files d'attente de sortie ($11_n$) en relation avec la mise à jour des caches (9i...9k) de traduction d'entrée,
- et à utiliser un mode d'arbitrage en mode PDU entre les différentes files d'attente pour assurer la transmission des cellules sans entrelacement des trames PDUs.

**Patentansprüche**

1. Verfahren zur Übertragung von IP-Rahmen in Form von Anwendungs-PDU-Rahmen in einem ATM-Schalter mit verteilter Architektur und Speicherung am Ausgang, wobei der Schalter einen Verwaltungsmodul (4) und mehrere Eingangsund Ausgangsverbinder ($7_i$, ..., $7_k$, $7_j$) enthält, die eine Emulationsfunktion für die Routenwahl von IP-Rahmen zwischen den Benutzern der verschiedenen ELAN-Medien aufweist, die in jedem der ELAN durch seinen Routenwahlmodul LEC repräsentiert wird, **dadurch gekennzeichnet, daß**

   • die Übertragungsfunktion für Rahmen in die ATM-Schicht der Eingangsverbinder ($7_i$, ..., $7_k$) verlegt ist, wobei die Übertragungsfunktion mindestens einen Schritt der Übersetzung des Vorspanns der Zellen des Anwendungsrahmens enthält und dieser Schritt aufweist:

      • Aus der ersten Zelle jedes PDU-Anwendungsrahmens, der an einem Eingangsverbinder ($7_i$, ..., $7_k$) ankommt, wird die IP-Adresse des Empfängers entnommen,
      • falls die IP-Adresse in einer Maskentabelle ($9_i$, ..., $9_k$) des entsprechenden Eingangsverbinders ($7_i$, ..., $7_k$) enthalten ist, wird ein Wertepaar aus logischem Kanal und ausgehender Richtung für die betreffende IP-Adresse und den logischen Eingangskanal gesucht und auf alle anderen Zellen des Anwendungsrahmens angewendet,
      • falls die IP-Adresse nicht in der Maskentabelle ($9_i$, ..., $9_k$) enthalten ist oder die Information überholt ist, wird eine Bitte um Aktualisierung der Maske ($9_i$, ..., $9_k$) an den Verwaltungsmodul (4) gerichtet und die Maskentabelle ($9_i$, ..., $9_k$) aufgrund der Routenwahl-Informationen, die im Verwaltungsmodul enthalten sind, aktualisiert.

2. Verfahren nach Anspruch 1, **dadurch gekennzeichnet, daß** es einen Schritt der doppelten Übersetzung enthält, nämlich einer ersten Übersetzung in jedem Eingangsverbinder ($7_i$, ..., $7_k$) zur Umwandlung der vom Benutzer UX abhängigen logischen Kanalnummer $VI_i$ zwischen dem Benutzer UX und dem LEC-Modul des Routenwahlorgans bezüglich des ELAN, zu dem der Benutzer UX gehört, und der IP-Adresse des Empfängers jedes vom Benutzer UX kommenden und an den Eingang eines Verbinders ($7_i$, ..., $7_k$) angelegten Anwendungsrahmens in eine interne Indexnummer VM, die von UX und UY abhängt und eine Identifikationsnummer $L_j$ eines Ausgangsverbinders ($7_j$), und einer zweiten Übersetzung in jedem Ausgangsverbinder ($7_j$) zur Umwandlung der von UX und UY abhängigen Indexnummer VM in eine Nummer eines von $U_j$ abhängigen logischen Kanals $VL_j$, der im Ausgangsverbinder ($7_j$) der direkten Verbindung zwischen dem Benutzer UY und seinem LEC-Routenwahlmodul zugeordent ist, und eine Nummer einer Warteschleife des Ausgangsverbinders ($7_j$), die dem Paar (UX, UY) zugeordnet ist.

3. Verfahren nach einem beliebigen der Ansprüche 1 und 2, **dadurch gekennzeichnet, daß** es darin besteht,

   - jedem Ausgangsverbinder ($7_j$) eine Warteschlange ($11_n$) für jedes Benutzerpaar zuzuordnen, wobei der zweite Benutzer an den betreffenden Verbinder angeschlossen ist, sodaß die direkte Verbindung zwischen ihm und dem entsprechenden LEC-Routenwahlmodul über diesen Verbinder verläuft,
   - die internen Indexwerte und die Ausgangswarteschleifen ($11_n$) unter Bezugnahme auf die Aktualisierung der Masken ($9_i$, ..., $9_k$) der Eingangsübersetzung dynamisch zuzuordnen,
   - und einen Schiedsmodus im PDU-Modus zwischen den verschiedenen Warteschleifen zu verwenden, um die Übertragung der Zellen ohne Verschachtelung der PDU-Rahmen zu gewährleisten.

**Claims**

1. Process for relaying IP frames in the form of PDU application frames within an ATM switch with distributed architecture and egress storage comprising a management module (4) and several ingress and egress (7i...7k, 7j) junctors having an IP frame routing emulation function between the users of the various ELAN media and represented in each of the ELANs by its router LEC module, **characterized in that**:

   • the frame relay function is offloaded into the ATM layer of the ingress junctors (7i...7k), the said relay function comprising at least one step of translating the header of the cells of the application frame comprising:

- for the first cell of each PDU application frame reaching an ingress junctor (7i...7k), the extraction of the IP address of the destination,
- if the IP address is contained in a cache table (9i,...9k) of the corresponding ingress junctor (7i,...7k), the search for a logical path and outgoing direction pair with regard to the relevant IP address and to the logical ingress path, applying the said pair to all the other cells of the application frame,
- if the IP address is not contained in the cache table (9i,...9k) or if the information item is too old, the transmission of a request to update the cache (9i,...9k) to the management module (4) and the updating of the cache table (9i,...9k) by virtue of the routing information residing in the management module.

2. Process according to Claim 1, **characterized in that** it comprises a step of double translation, a first translation in each ingress junctor (7i...7k) so as to transform the logical path number VIi, function of UX, between the user UX and the LEC module of the router relating to the ELAN to which the user UX belongs and the IP address of the destination of each application frame originating from the user (UX) applied to the ingress of a junctor (7i...7k) into an internal index number VM, function of UX and UY, and an identifier number Lj of an egress junctor (7j), a second translation in each egress junctor (7j) so as to transform the index number VM, function of UX and UY, into a logical path number VLj, function of Uj, associated in the egress junctor (7j) with the direct connection between the user UY and his corresponding router LEC module and a queue number for the egress junctor (7j) allocated to the pair (Ux, UY).

3. Process according to any one of Claims 1 and 2, **characterized in that** it consists:

   - in allocating in each egress junctor (7j) a queue ($11_n$) for each user pair, the second of whom is attached to the relevant junctor, that is to say that the direct connection between himself and the corresponding router LEC module passes through this junctor,
   - in dynamically allocating the internal indices and the egress queues ($11_n$) in conjunction with the updating of the ingress translation caches (9i...9k),
   - and in using a mode for arbitration in PDU mode between the various queues so as to ensure the transmission of the cells without interleaving of the PDU frames.

MODULE
GESTION 4

MODULE
D'ACCÈS 1 COUCHE
ATM 2 MODULE DE
BRASSAGE 3

# FIG.1a

PORTS

JONCTEUR 7₁ . . . . JONCTEUR 7ₙ MODULE
DE
GESTION

8₁ 8ₙ

MODULE
BRASSEUR 5 6

# FIG.1b

B

RÉSEAU

a

I

C

d a

A

B

A

C

D

# FIG.2a

FIG.2b

FIG.2c

FIG.2e

FIG.2f

FIG.3a

FIG.3b

FIG.3c

FIG.3d

FIG.3e

FIG.4